Europäisches Patentamt

European Patent Office

Office européen des brevets

(11) Publication number: **0 078 623**
A1

## EUROPEAN PATENT APPLICATION

(21) Application number: 82305516.5

(22) Date of filing: 18.10.82

(51) Int. Cl.³: **A 01 N 43/78**
// (A01N43/78, 43/54)

(30) Priority: 29.10.81 GB 8132693

(43) Date of publication of application: 11.05.83
Bulletin 83/19

(84) Designated Contracting States: **AT BE CH DE FR GB IT LI LU NL SE**

(71) Applicant: FBC LIMITED, Hauxton, Cambridge CB2 5HU (GB)

(72) Inventor: Mayes, Anthony Joseph, 61 High Street, Little Shelford Cambridge (GB)
Inventor: Rea, Bryan Leslie, 61 Dovecote Lane, Beeston Nottingham (GB)

(74) Representative: Waldman, Ralph David et al, Industrial Property Department FBC Limited Chesterford Park Research Station, Saffron Walden, Essex CB10 1XL (GB)

(54) Herbicidal mixtures comprising benazolin.

(57) A herbicidal composition comprising benazolin and 2,4-diamino-5-methylthio-6-chloropyrimidine.

EP 0 078 623 A1

0078623

CASE 81/32693

HERBICIDAL MIXTURES COMPRISING BENAZOLIN

This invention relates to herbicidal compositions and to a method of selectively controlling weeds in crops.

Benazolin is the common name for a herbicide having the chemical name 4-chloro-2-oxobenzothiazolin-3-ylacetic acid. In this specification this name is used to mean benazolin as the free acid or one of its salt, e.g. potassium salt or ester e.g. ethyl ester derivatives, acceptable in herbicidal applications.

It has now been found that unexexpected advantages may be obtained by using benazolin in conjunction with 2,4-diamino-5-methylthio-6-chloropyrimidine.

Thus according to the invention there is provided a herbicidal composition comprising benazolin and 2,4-diamino-5-methylthio-6-chloropyrimidine.

The invention also provides a method of controlling weeds which comprises applying to the weeds or their locus, benazolin and 2,4-diamino-5-methylthio-6-chlorpyrimidine, either together or in sequence.

The invention is generally applicable in controlling weeds in the presence of growing crops such as cereals, e.g. wheat and barley, maize, peanuts, sunflowers, sorghum, soybeans, rice and cotton.

Examples of weeds that may be controlled include

mayweeds such as <u>Matricaria recutita</u>, chickweed (<u>Stellaria media</u>), knotgrass (<u>Polygonum aviculare</u>), speedwells (<u>Veronica</u> spp.), cleavers (<u>Galium aparine</u>), pigweeds (<u>Amaranthus</u> spp.), fat-hen (<u>Chenopodium album</u>), black nightshade (<u>Solanum nigrum</u>), barnyard grass (<u>Echinochloa crus-galli</u>), meadow grass (<u>Poa</u> spp.), millets (<u>Panicum</u> spp.), cocklebur (<u>Xanthium</u> spp.), jimsonweed (<u>Datura stramonium</u>), morning glory (<u>Ipomoea</u> spp.), sicklepod (<u>Cassia obtusifolia</u>) and prickly sida (<u>Sida spinosa</u>).

The weight ratio of benazolin to 2,4-diamino-5-methylthio-6-chloropyrimidine in the mixture of the invention is preferably within the range of from 2:1 to 1:10, more preferably 1:1 to 1:5, e.g. 1:2 to 1:5.  As examples of the quantities that are most suitable, the rate of application of benazolin can be from 25 to 500 e.g. 100-400 g/ha.  The rate of application of 2,4-diamino-5-methylthio-6-chloropyrimidine is preferably from 250-2000, e.g. 500-1500 g/hectare.  The ratios and quantities of benazolin are based on the weight of the free acid.

If desired the compositions may include other suitable herbicides e.g. to broaden the spectrum.  Examples of such compounds include bromoxynil, usually in the form of its octanoate ester, ioxynil, usually as its octanoate ester or potassium salt, triazines (such as atrazine, terbutryne and trietazine) and isoproturon.

The mixture of active herbicides can be applied by, for example a spray treatment in any form known in the art for the formulation of herbicidal compounds and preferably as a dispersion or emulsion.

As a dispersion, the mixture comprises the active components dispersed in a liquid medium, preferably water. The primary composition for a dispersion can be provided in a number of forms. For example it can be a dispersible solution which comprises the active components dissolved in a water-miscible solvent with the addition of a dispersing agent or it can be a dispersible powder comprising the active components in powder form mixed with a dispersing agent (usually a surfactant) and generally a powder diluent such as kaolin.

An emulsion comprises the active components dissolved in a water-immiscible solvent which is formed into an emulsion with water in the presence of an emulsifying agent. An emulsion of the desired concentration can be formed from a primary composition of the following types: a concentrated stock-emulsion comprising the active components in combination with an emulsifying agent, water and water-immiscible solvent, or an emulsifiable concentrate comprising a solution of the active components in a water-immiscible solvent containing an emulsifying agent.

The above herbicidal formulations are to be regarded as part of the invention.  The total concentration of the active components in a composition for direct application to the crop by conventional ground methods is preferably within the range of 0.02 to 1 per cent by weight, of the composition, but more concentrated compositions containing, for example up to 20 percent may be desirable.

In a primary composition the total amount of active compound can vary widely, for example, from 5 to 95 percent by weight.

The invention is illustrated in the following Example

## Example

A field of barley infested with various weeds was divided into replicate areas and sprayed at various application rates with aqueous dispersions of benazolin ethyl ester and 2,4-diamino-5-methylthio-6-chloropyrimidine (hereinafter referred to as "DMC").  Good control of the broad leaved weeds present was achieved using mixtures containing benazolin at a rate of 0.2 and 0.3 kg/hectare and 2,4-diamino-5-methylthio-6-chloropyrimidine at rates of 0.6 and 0.9 kg/hectare.  Synergism was exhibited in the following instances.  Assessments were made 14 weeks after spraying.  The weights of benazolin ester are based on the weight of the free acid.

0078623

Cleavers (Galium aparine)

| Benazolin-ethyl | | DMC | | Mixture - % Control | |
|---|---|---|---|---|---|
| kg/ha | % control | kg/ha | % control | Expected | Observed |
| 0.2 | 0 | 0.6 | 12 | 12 | 47 |
| 0.3 | 3 | 0.6 | 12 | 15 | 30 |
| 0.2 | 0 | 0.9 | 47 | 47 | 65 |
| 0.3 | 3 | 0.9 | 47 | 50 | 67 |

Ivy leaved speedwell (Veronica hederifolia)

| Benazolin-ethyl | | DMC | | Mixture - % Control | |
|---|---|---|---|---|---|
| g/ha | % control | g/ha | % control | Expected | Observed |
| 0.2 | 3 | 0.6 | 28 | 31 | 60 |
| | | 0.9 | 63 | 66 | 72 |

No significant damage to the barley was observed.

## Claims

1) A herbicidal composition comprising benazolin and 2,4-diamino-5-methylthio-6-chloropyrimidine.

2) A composition according to claim 1 in which the benazolin is in the form of an agronomically acceptable ester.

3) A composition according to claim 2 in which the benazolin is in the form of its ethyl ester.

4) A method of controlling weeds which comprises applying to the weeds or their locus, benazolin and 2,4-diamino-5-methylthio-6-chloropyrimidine, either together or in sequence.

# EUROPEAN SEARCH REPORT

European Patent
Office

Application number

EP 82 30 5516

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | ---<br>THE PESTICIDE MANUAL, 6th edition. 1979, page 28, editor C.R. Worthing, London, G.B.<br>--- | 1-4 | A 01 N 43/78 //<br>(A 01 N 43/78<br>A 01 N 43/54 ) |
| A | FR-A-2 417 507 (PCUK)<br>* Claim 3 * .<br>----- | 1,4 | |

**TECHNICAL FIELDS SEARCHED (Int. Cl. 3)**

A 01 N

The present search report has been drawn up for all claims

| Place of search<br>THE HAGUE | Date of completion of the search<br>03-02-1983 | Examiner<br>DECORTE D. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82